# EUROPEAN PATENT APPLICATION

(11) **EP 0 923 012 A2**
(43) Date of publication of application: **16.06.1999**
(21) Application number: 98500268.2
(22) Date of filing: 10.12.1998
(51) Int. Cl.: G05B 19/4061

(54) **Procedure and device for the closing and opening of elevating apparatus doors**

(30) Priority: 11.12.1997 ES 9702575
(71) Applicant: Tecnolama, S.A., 43206 Reus (ES)
(72) Inventor: Piollé, Alain, 43206 Reus (ES)
(74) Representative: SUGRANES - VERDONCES - FERREGÜELA

(57) **Abstract**

The procedure comprises the stages of feeding the motor of the door (5) with a determinated frequency and a voltage; sensing the door position (x); provide the voltage and frequency values relative to the door position (x) ; and in the case of an obstacle being placed in the door closing movement trajectory, the stages of detecting the obstacle, activating the reopening of the door, slowing the door speed when the door aproaches the obstacle, reactivate the reopening of the door in the case of the said obstacle still being present; and increasing the speed of the door in the opposite situation.

The device comprises a variator of feed voltage and frequency of the motor(5) and a door position encoder which comprises two independent sensors (8, 9) which each provide impulses (23, 25). The steps of detecting and activating are performed when the time passed between these impulses exceeds a predeterminated time value, caused by the absence of a new impulse detected and/or the presence of an inverse impulse to that desired.

## Description

### Technical Field of the Invention.-

The present invention refers to a procedure and a device for the closing and opening of elevating apparatus doors, of the door type which comprises at least one panel which moves along a horizontal guide, dragged by a drag piece integral with an endless belt activated by a variable voltage and frequency induction motor.

The procedure to which the present invention refers is of the type which comprises the repetitive stages of:
- feeding, at all times, the motor with a voltage and frequency such that the door follows a specific, variable space-speed curve;
- sensing the door position in function of the impulses originating from the sensors of a position encoder;
- providing the voltage and frequency values relative to the position values captured; and
in the case of an obstacle being placed in the door closing movement trajectory, the final stages of:
- detecting the said presence; and
- activating the reopening of the door.

The procedure to which the present invention refers is of the type which comprises a door position encoder and a motor feed voltage and frequency variator.

### State of the Art.-

In the present state of the art, elevating apparatus cabin and landing doors are often used which consist of one or several panels, which move along a horizontal guide, and which is dragged by a drag piece integral with an endless belt, activated by a motor.

At the present time a wide variety of procedures and devices are known for the control of the kinematic variables which intervene in the opening and closing process of the panels of such elevating apparatus doors.

Until the present time, the types of procedure most commonly employed to this end have been those which are based on "following" the door speed relative to the overload, due to the variation of the resisting torque, on a D.C motor, coupled to a tachometric dynamo in a closed loop with an assigned voltage, which is that which the motor must follow.

These classic procedures present the following drawbacks:
they imply a high mechanical wear on the D.C motor, which causes in its turn mechanical misalignments; and
they imply at the same time the setting in motion of the classic control system in a closed loop, which is difficult to adjust and so increases the setting in service and maintenance costs.

To solve those drawbacks, procedures and devices have recently been proposed based on the use of A.C induction motors with motor feed frequency and voltage transformers.

These procedures comprise the repetitive stages of feeding the motor at all times with a frequency and voltage such that the door follows a specific, variable space-speed curve; sensing the door position in function of the impulses originating from a position encoder device, provided with sensors placed contiguous to the magnetic field; changing the said voltage and frequency values relative to the position values captured.

These recent procedures comprise the alternative stages, when the situation occurs in which an obstacle blocks the closing movement trajectory of the door, of detecting the said presence and activating the reopening of the door.

One embodiment of a procedure based on the application of the cited position encoders to A.C motors is that described in the European patent EP 0 677 475, in which the door position is measured by counting the number of impulses generated by a position encoder of the said type.

In the European patents EP 0 676 525, EP 0 676 526 and EP 0 676 527, a device is described for the impulsion of an elevating apparatus cabin door via a linear induction motor of variable voltage and frequency, in an open loop to achieve an optimum speed profile, indicated by an incremental linear position encoder, with integral and proportional gain (known in the field as PI control).

Another procedure and device for the movement control of elevating apparatus doors is that described in the patent EP 0 665 182, in which a variable voltage and frequency induction motor is used, and which dispenses with speed sensors.

All these known techniques, although in general they report a satisfactory functionality, and in particular they allow for the correct reopening of the door when the motor is subjected to a brusque increase on the resisting torque during door closing, for example due to an obstacle, suffer the following drawbacks:
- They normally perform a merely kinematic control of the door panels, based on adjustment of a space-speed curve, for which reason the dynamic control of the door is hindered;
- As a consequence, they do not allow very high opening speeds; and in the subsequent cycle to that of reopening, they do not avoid the obstacle being hit a second time, with the consequent negative implications from the mechanical and personal safety points of view.

The object of the present invention is to provide a new form of embodiment of a procedure and a device for the closing and opening of elevating apparatus doors, which allows for the attainment of a global solution to all and each one of the cited drawbacks.

### Description of the Invention.-

Thus, a first object of the present invention is a procedure of the said type, of a novel concept, which is essentially characterized in that, in the case of the final stages being verified of detecting the presence of an obstacle and activating the reopening of the door, these comprise the stages of:
- Slowing the door speed when the door approaches an anterior position close to the position of the obstacle;
- Reactivating the reopening of the door, in the case of the said obstacle still being present; and
- increasing the speed of the door in the opposite situation.

The present invention further relates to a device of the cited type, for performing the procedure according to the invention, which is characterized in that the position encoder comprises two independent sensors which each provide impulses, in such a manner that the steps of detecting the presence of an obstacle and of activating the reopening are performed when the time passed between two consecutive impulses exceeds a predetermined time value, caused by the absence of a new impulse detected and/or the presence of an inverse impulse to that desired originating from the cited sensors.

### Brief Description of the Drawings.-

There will follow a detailed description of one form of preferred, although not exclusive, embodiment for the better understanding of which, are attached some accompanying drawings, included merely as a non-limiting example, in which:
Fig. 1 is a space-speed curve fixed for the opening of an elevating apparatus door governed by the procedure according to the present invention, in the absence of obstacles;
Fig. 2 is another space-speed curve, representative of the dynamic behavior of the door, in answer to the presence of an obstacle in the door trajectory and the setting in practice of the procedure according to the present invention;
Fig. 3 is another space-speed curve, which illustrates the dynamic behavior of the door in a subsequent cycle to the detection of the obstacle in the case that this is present and in the case that it has been eliminated,
Fig. 4 is a schematic, perspective view of the installation mode of one form of embodiment of the device according to the present invention; and
Fig. 5 is an explanatory block diagram of the working principle of the device in Fig. 4.

### Detailed Description of the Drawings.-

In the said drawings it can be seen that the procedure and the device 1 according to the invention is employed for the governing of an A.C three-phase induction motor which activates the automatic landing and cabin doors of an elevating apparatus, consisting of at least one panel 10.

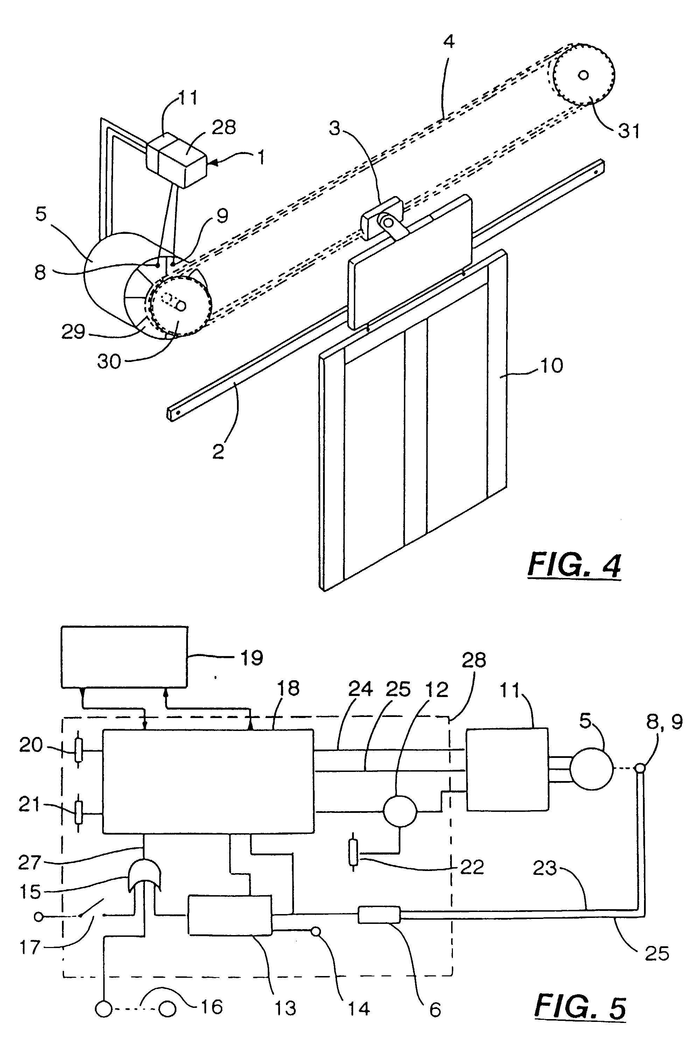

As can be observed in Fig. 4, the panel 10 moves along a horizontal guide 2, which is dragged in its transfer movement via a drag piece 3 fixed to an endless belt 4. This last is activated by the induction motor 5, via a traction wheel 30, coaxial to the shaft of the motor 5 and which revolves at its opposite end against another wheel 31 in the form of an idle wheel.

The induction motor 5 is provided, at the end contiguous to the wheel 30, with a permanent magnet 29 integral with and coaxial to the rotor of the motor 5. The permanent magnet 29 contains a plurality of N and S poles.

The rotational movement of the induction motor 5 is controlled by the device 1 of the present invention, which, coupled to the motor, comprises a circuit box 28, an inverter 11, attached to that and an interface 19. The circuit box 28 houses a microprocessor 18, a comparator 12, a position impulse encoder 13, an OR gate (logic circuit) 15, and some consignment inputs for the door opening speed 20, for the door closing speed 21 and for the turning torque 22 of the motor 5, as is shown in Fig. 5.

The inverter 11 generates the three feeding phases of the induction motor 5, with the object of specifying its turn direction, and therefore the opening or closing direction of the panels 10 of the elevating apparatus door, relative to the entry instructions to the same, originating from the microprocessor 18 and the comparator 12. The said entry instructions to the inverter 11 are constituted by a frequency signal 24 and a turning direction signal 25 specified by the microprocessor 18 in answer to the entry values to the same.

In Figs. 4 and 5 it can be seen that the device incorporates two sensors 8, 9, fixed and placed preferably at 90° the one to the other, each placed over a N or S pole of the permanent magnet 29 and each of which sends impulse signals 23 and 26 to the position encoder 6. One of the two sensors is adapted to detect the turning direction of the motor 5 (for example, signal 23), and thus the movement direction of the door panel 10, while the other sensor is set to count the position impulses.

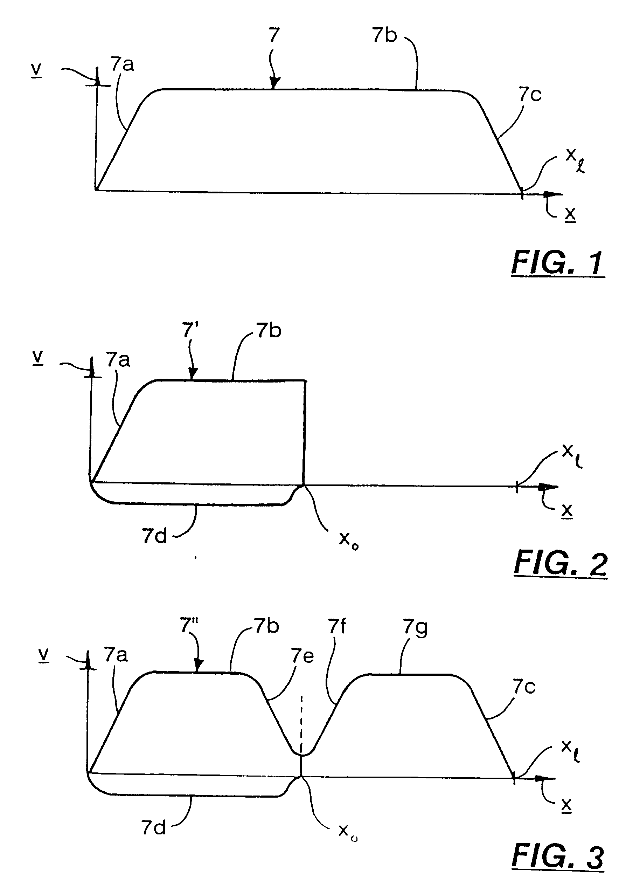

Each opening or closing cycle of the door is performed in accordance with a variable space-speed curve 7, (see Fig. 1) in which the abscissa axis represents the space x traveled by the door, which is proportional to the turning angle of the motor 5, while the ordinate axis represents the speed v to which the door is subjected. The curve 7 is selected in such a manner that the dynamic conditions to which the door is subjected are at all times the optimum conditions, with the object of protecting the door, while the cycle is the briefest possible, through the variation of the feed frequency of the alternate current applied to the motor 5.

In the curve 7 in Fig. 1 there can be seen three sections 7a, 7b, and 7c. The first section 7a represents an increasing speed v phase relative to the space x traveled by the door: the second section 7b represents a constant speed phase; and the third section 7c represents a decreasing or braking speed phase, which finishes by stopping the door when x corresponds to x₁, i.e., the path in the opening or closing cycle of the door.

The procedure and device are adapted to control at all times the position, speed and movement direction of the door and to detect, during a closing cycle of the same, an obstacle in its trajectory and the position xₒ of the said obstacle, (see Fig. 2), inverting the movement direction of the door, which is to say verifying a reopening if the door is in its closing cycle. The curve 7' in Fig. 2 represents this reopening maneuver implemented by the procedure in such a case. The reopening is represented in Fig. 2 via a section 7d of constant negative speed.

Fig. 3 represents the behavior of the procedure in the closing cycles subsequent to that of the obstacle detection. On the door once again approaching memorized obstacle position xₒ, the door is subjected during a certain section to a constant speed, up to a point close to xₒ, after which the speed v decreases according to section 7e.

If the obstacle remains at xₒ, the procedure 1 activates giving the consignment to the induction motor 5 of a new inversion and reopening of the door according to the cited section 7d. If however, the obstacle is no longer present, the procedure 1 orders a new phase of increasing speed 7f , until the door regains a constant speed (phase 7g) to pass directly to phase 7c of decreasing speed in Fig. 3 typical of normal circumstances.

It should be understood that, with only the information originating from the position encoder 6, it is possible to control the door reopening maneuver. This reopening is verified when the exit 27 of the OR gate (logic circuit) 15 (Fig. 2) acquires the value of "1" if the encoder signal is "1". That is to say when the procedure 1 detects an obstacle, or if it "breaks" a reopening barrier 16 of the known type, for example when a passenger tries to enter or leave the cabin while the door is closing, or if reopening is ordered by pushing a button in the cabin 17, also of a known type.

The procedure is based on a parallel double control. The first tries to adjust the force on the door via a torque control, which can itself be adjusted via a torque potentiometer 22. Therefore all the available torque is applied in the door opening, while for the closing of the same only the programmed torque is applied, in such a manner that the force on the door does not supersede the value 150 N, which is the maximum established in current legislation concerning elevating apparatus.

The second control cited is based on the reading of the position encoder 6, and consists in the programmable counter 13, which is reset to zero precisely on the impulses from the encoder 6. A programmed maximum value in real time relative to the position of the torque potentiometer 22 and the instantaneous speed allows, on overloading, to perform the reopening.

Each time that a reopening is verified ordered by the exit of the encoder 6, which is when the reopening is verified owing to the existence of an obstacle in the trajectory of the door panel 10, the microprocessor 18 gives the order to perform the described curves 7' and 7'' corresponding to braking and start-up with the object of not deteriorating the mechanism.

A frequency variator of the device 1 enables a voltage to be applied to the induction motor 5 to vary the door speed without need of gearing.

The counter 13 has the impulses of its own watch 14 as entry, and its working is determined by the impulses originating from the encoder 6, in such a manner that the detection of an obstacle and the memorization of its position x^{o} in a memory device of the microprocessor 18, as well as the activation of the last stop or movement inversion, is verified by the activation of an expert system implemented in the same, according to one of the following non-limiting examples:
- the said presence being detected when the time passed between two impulses of the encoder 6 exceeds a predetermined time value;
- the said presence being detected by the encoder 6, by the absence of a new impulse; or otherwise
- via the detection of an inverted impulse to that desired in the encoder 6.

The expert system and thus the procedure of the present invention allows:
- The detection and memorization of the mass and dynamic friction of the door panel/s 10, via the calculation, in the first section 7a of the maneuver, of the force obtained relative to the voltage applied to the induction motor 5, with the object of correcting the frequency and voltage values in order to obtain the desired space-speed curve 7; and
- The detection and memorization of the mode skip of the induction motor 5, via the deviations taking place between the applied frequency and the speed obtained with the object of optimizing that mode skip by adjusting the voltage applied to the motor _{5.}

## Claims

1. Procedure for the closing and opening of elevating apparatus doors, of the door type which comprises at least one panel (10) which moves along a horizontal guide (2), dragged by a drag piece (3) integral with an endless belt (4) activated by a variable voltage and frequency induction motor (5), the procedure comprising the repetitive stages of:
- feeding, at all times, the motor with a voltage and frequency such that the door follows a specific, variable space-speed curve;
- sensing the door position in function of the impulses originating from the sensors of a position encoder;
- providing the voltage and frequency values relative to the position values captured;
and in the case of an obstacle being placed in the door closing movement trajectory, the final stages of:
- detecting the said presence; and
- activating the reopening of the door,
characterized in that, in the case of the final stages being verified of detecting the presence of an obstacle and activating the reopening of the door, these comprise the stages of:
- Slowing the door speed when the door approaches an anterior position close to the position (xₒ) of the obstacle;
- Reactivating the reopening of the door, in the case of the said obstacle still being present; and
- increasing the speed of the door in the opposite situation.

2. Device (1) for the closing and opening of elevating apparatus doors, for the practical embodiment of the procedure according to Claim 1, of the type of which comprise a door position encoder (6) and a variator of feed voltage and frequency of the motor (5), characterized in that the position encoder comprises two independent sensors (8, 9) which each provide impulses (23, 25), in such a manner that the steps of detecting the presence of an obstacle and of activating the reopening are performed when the time passed between two consecutive impulses (23, 25) exceeds a predetermined time value, caused by the absence of a new impulse detected and/ or the presence of an inverse impulse to that desired originating from the cited sensors (8, 9).
